# EUROPEAN PATENT APPLICATION

(11) **EP 4 756 515 A1**
(43) Date of publication of application: **10.06.2026**
(21) Application number: 24861845.6
(22) Date of filing: 23.08.2024
(51) Int. Cl.: G02B 27/10, G02B 27/42, H04B 10/50, H04B 10/2575

(54) **BEAMFORMING SYSTEM**

(30) Priority: 04.09.2023 CN 202311138995
(71) Applicant: HUAWEI TECHNOLOGIES CO., LTD., Shenzhen, Guangdong 518129 (CN)
(72) Inventor: YIN, Yanlong, Shenzhen, Guangdong 518129 (CN); CHEN, Teyan, Shenzhen, Guangdong 518129 (CN); GUO, Yuhao, Shenzhen, Guangdong 518129 (CN); GU, Zenghui, Shenzhen, Guangdong 518129 (CN)
(74) Representative: MERH-IP Matias Erny Reichl Hoffmann Patentanwälte PartG mbB
(86) International application number: PCT/CN2024/114082
(87) International publication number: WO 2025/051001

(57) **Abstract**

This application provides a beamforming system, which may be applied to the fields of wireless communication systems, autonomous driving, artificial intelligence, and the like. Small-scale, low-power, and fast-response two-dimensional beamforming can be implemented. The system includes a first optical diffraction module and a second optical diffraction module array, the first optical diffraction module includes at least one input port and a plurality of output ports, and each second optical diffraction module in the second optical diffraction module array includes one input port and a plurality of output ports. The first optical diffraction module is configured to receive at least one path of first signal light, and generate a plurality of paths of second signal light with different phases based on the at least one path of first signal light. Each second optical diffraction module is configured to receive one path of second signal light in the plurality of paths of second signal light, and generate a plurality of paths of third signal light with different phases based on the one path of second signal light, where the plurality of paths of third signal light are used to generate a plurality of paths of first radio frequency signal.

## Description

This application claims priority to Chinese Patent Application No. 202311138995.3, filed with the China National Intellectual Property Administration on September 4, 2023 and entitled "BEAMFORMING SYSTEM", which is incorporated herein by reference in its entirety.

### TECHNICAL FIELD

This application relates to the field of optical communication technologies, and more specifically, to a beamforming system.

### BACKGROUND

In a beamforming technology, many micro millimeter-level antenna sensors are used to form a rectangular array, and parameters of basic antenna elements in the array and different transmission time of signals of the antenna sensors are adjusted through human intervention, to form centralized and directional electromagnetic beam transmission with higher power, so that a signal obtained by a receiver achieves an optimal effect. This becomes one of important technologies for wireless communication. As a wireless frequency band gradually develops toward a high frequency band, a limited transmission distance of a radio wave and expansion of a signal capacity lead to a sharp increase in a quantity of antennas. In a beamforming solution based on a conventional subarray design, because power consumption is relatively high and a quantity of antennas allocated to each subarray is limited, it is difficult to obtain a high-quality beam. Currently, full connection becomes an effective means of reducing a quantity of antennas and improving beam quality. Because electrical full connection basically cannot be implemented, optical full connection becomes a research hotspot. In a current optical full connection solution, there are common disadvantages such as an excessively large loss, a large scale of system devices, and inability to implement two-dimensional beamforming.

Therefore, how to implement two-dimensional beamforming with a small device scale and low system power consumption is a problem to be resolved.

### SUMMARY

This application provides a beamforming system, to implement on-chip integrated two-dimensional beamforming, which has advantages such as a relatively small device scale, relatively low system power consumption, and a high response speed.

According to a first aspect, an embodiment of this application provides a beamforming system. The system includes a first optical diffraction module and a second optical diffraction module array, the first optical diffraction module includes at least one input port and a plurality of output ports, and each second optical diffraction module in the second optical diffraction module array includes one input port and a plurality of output ports. The first optical diffraction module is configured to receive at least one path of first signal light, and generate a plurality of paths of second signal light with different phases based on the at least one path of first signal light. Each second optical diffraction module is configured to receive one path of second signal light in the plurality of paths of second signal light, and generate a plurality of paths of third signal light with different phases based on the one path of second signal light, where the plurality of paths of third signal light are used to generate a plurality of paths of first radio frequency signal.

Based on the solution of this application, two stages of optical diffraction modules are cascaded, so that phases of an input signal in two directions can be changed, thereby implementing two-dimensional beamforming. In addition, when the optical diffraction module provided in this application is integrated into a chip, miniaturization of a two-dimensional beam system can be implemented.

With reference to the first aspect, in some implementations of the first aspect, the first optical diffraction module includes a first optical switch and a first optical diffraction device, the second optical diffraction module array includes a second optical switch array and a second optical diffraction device array, each second optical diffraction module includes one second optical switch and one second optical diffraction device, a plurality of output ports of the first optical switch are in one-to-one correspondence with a plurality of input ports of the first optical diffraction device, a plurality of output ports of the first optical diffraction device are in one-to-one correspondence with input ports of a plurality of second optical switches in the second optical switch array, and a plurality of output ports of each second optical switch are in one-to-one correspondence with a plurality of input ports of a corresponding second optical diffraction device. The first optical switch is configured to receive the at least one path of first signal light, and output the at least one path of first signal light to at least one input port of the first optical diffraction device; the first optical diffraction device generates the plurality of paths of second signal light with the different phases based on the at least one path of first signal light received by the at least one input port, and outputs the plurality of paths of second signal light to the input ports of the plurality of second optical switches of the plurality of second optical diffraction modules; each second optical switch is configured to receive the one path of second signal light, and output the one path of second signal light to the plurality of input ports of the corresponding second optical diffraction device; and each second optical diffraction device generates the plurality of paths of third signal light with the different phases based on a plurality of paths of second signal light received by the plurality of input ports.

It should be noted that, in the solution of this application, the optical diffraction device may be a Rotman lens, a Blass lens, or the like. The optical diffraction device in the solution of this application includes at least one input port and a plurality of output ports, and is configured to generate a plurality of pieces of output light based on at least one piece of input light. For example, if the optical diffraction device has one input port, the optical diffraction device may generate a plurality of paths of output light with different phases by using input light that is input through the one input port, and respectively output the plurality of paths of output light from the plurality of output ports. If the optical diffraction device has a plurality of input ports, the optical diffraction device may generate a plurality of paths of output light with different phases by using a plurality of pieces of input light that are input through the plurality of input ports, and respectively output the plurality of paths of output light from the plurality of output ports.

Based on the foregoing solution provided in this application, two-dimensional beamforming is implemented by cascading the optical switch and the optical diffraction device. The optical switch can implement fast path switching, so that a system scanning speed reaches an ns level, thereby improving a system response speed and reducing system power consumption. In addition, compared with that in the conventional technology in which each wavelength corresponds to different modulators and phase shift units, multi-channel multi-beam phase shift can be met by using a single optical diffraction device, thereby greatly reducing a system device scale.

With reference to the first aspect, in some implementations of the first aspect, the system further includes a first mixer array. Each mixer in the first mixer array generates one path of first mixed signal light based on one path of third signal light from a corresponding second optical diffraction device and local oscillator light, where the one path of first mixed signal light is used to generate one path of first radio frequency signal.

It should be noted that a mixing solution of the mixer is not limited in this application, and homodyne mixing or heterodyne mixing may be selected for the system based on a use scenario and an application requirement of the system.

With reference to the first aspect, in some implementations of the first aspect, a plurality of output ports of each second optical diffraction device are in one-to-one correspondence with input ports of a plurality of first mixers in the first mixer array, and each first mixer is specifically configured to: receive the one path of third signal light from the corresponding second optical diffraction device, and mix the one path of third signal light with the local oscillator light to generate the one path of first mixed signal light.

In this embodiment of this application, an output of the first mixer may be directly connected to an input port of the second optical diffraction device, to receive one path of third signal light from the corresponding second optical diffraction device, and perform a mixing operation.

With reference to the first aspect, in some implementations of the first aspect, the first optical switch is a wavelength selective switch, and the second optical switch array is a wavelength selective switch array.

It should be noted that, in the solution of this application, when the first optical switch receives a plurality of paths of first signal light, if wavelengths of the plurality of paths of first signal light are the same, the first optical switch and the second optical switch may be optical switches without a wavelength selection function, or may be wavelength selective switches with a wavelength selection function. In addition, the first optical switch and the second optical switch may be optical switches of different types. For example, the first optical switch is an optical switch without a wavelength selection function, and the second optical switch is a wavelength selective switch. If wavelengths of the plurality of paths of first signal light are different, the first optical switch and the second optical switch are wavelength selective switches.

Based on the foregoing solution, when an input of the system is a plurality of pieces of first signal light with different wavelengths, the wavelength selective switch can enable signal light with a plurality of wavelengths to share the first optical diffraction device, thereby reducing a system device scale.

With reference to the first aspect, in some implementations of the first aspect, the system further includes a wavelength division demultiplexer array, the wavelength division demultiplexer array is located between the second optical diffraction device array and the first mixer array, a plurality of output ports of each second optical diffraction device are in one-to-one correspondence with input ports of a plurality of wavelength division demultiplexers in the wavelength division demultiplexer array, and a plurality of output ports of each wavelength division demultiplexer in the wavelength division demultiplexer array are in one-to-one correspondence with input ports of a plurality of second mixers in the first mixer array; each wavelength division demultiplexer is configured to receive the one path of third signal light from the corresponding second optical diffraction device, and demultiplex the one path of third signal light into a plurality of paths of fourth signal light with different wavelengths; and each second mixer is specifically configured to receive one path of fourth signal light from a corresponding wavelength division demultiplexer, and mix the one path of fourth signal light with the local oscillator light to generate the one path of first mixed signal light.

In this embodiment of this application, when an input of the system is a plurality of pieces of first signal light with different wavelengths, the wavelength division demultiplexer may be arranged between the mixer and the optical diffraction device, and signal light with different wavelengths is separated by using the wavelength division demultiplexer, so that the signal light with the different wavelengths is input to corresponding mixers for mixing, thereby ensuring normal running of the system when the input is a plurality of pieces of signal light with different wavelengths.

With reference to the first aspect, in some implementations of the first aspect, the system further includes a first photoelectric detector array, and input ports of each first photoelectric detector in the first photoelectric detector array are in one-to-one correspondence with output ports of the plurality of second mixers; and each first photoelectric detector is configured to receive, through a space division multiplexing fiber, a plurality of paths of first mixed signal light output by the plurality of second mixers, and convert the plurality of paths of first mixed signal light into a plurality of paths of first electrical signal; or each first photoelectric detector is a segmented photoelectric detector, and is configured to receive a plurality of paths of first mixed signal light output by the plurality of second mixers, and convert the plurality of paths of first mixed signal light into a plurality of paths of first electrical signal.

It may be understood that, in the solution of this application, the space division multiplexing fiber may be a multi-core fiber, a few-mode fiber, a multi-core few-mode fiber, or the like. This is not limited in this application. The space division multiplexing fiber or the segmented photoelectric detector enables each wavelength after mixing to be input to a corresponding detector, thereby ensuring normal running of the system.

With reference to the first aspect, in some implementations of the first aspect, the system further includes a first wavelength division multiplexer array, and input ports of each first wavelength division multiplexer in the first wavelength division multiplexer array are in one-to-one correspondence with output ports of the plurality of second mixers; and each first wavelength division multiplexer is configured to receive a plurality of paths of first mixed signal light from the plurality of corresponding second mixers, and generate one path of first wavelength division multiplexing signal light based on the plurality of paths of first mixed signal light.

Based on the foregoing solution, the wavelength division multiplexer is introduced after the second mixer, so that a transmission capacity and efficiency of an optical fiber can be greatly improved, and use costs of the optical fiber can be reduced.

With reference to the first aspect, in some implementations of the first aspect, the system further includes a second photoelectric detector array, and an input port of each second photoelectric detector in the second photoelectric detector array is in one-to-one correspondence with an output port of each first wavelength division multiplexer; and each second photoelectric detector is configured to receive the one path of first wavelength division multiplexing signal light from the corresponding first wavelength division multiplexer, and convert the one path of first wavelength division multiplexing signal light into one path of second electrical signal.

With reference to the first aspect, in some implementations of the first aspect, the first optical diffraction module is configured to receive one path of first signal light, the system further includes a third optical diffraction module and a fourth optical diffraction module array, the third optical diffraction module includes at least one input port and a plurality of output ports, and each fourth optical diffraction module in the fourth optical diffraction module array includes one input port and a plurality of output ports.

The third optical diffraction module is configured to receive one path of fifth signal light, and generate a plurality of paths of sixth signal light with different phases based on the one path of fifth signal light.

Each fourth optical diffraction module is configured to receive one path of sixth signal light in the plurality of paths of sixth signal light, and generate a plurality of paths of seventh signal light with different phases based on the one path of sixth signal light, where the plurality of paths of seventh signal light are used to generate a plurality of paths of second radio frequency signal.

It should be noted that, when the first optical switch is a single-input multiple-output optical switch, single-beam two-dimensional beamforming can be extended to dual-beam two-dimensional beamforming by introducing the third optical diffraction module and the fourth optical diffraction module array in the system. It may be understood that, based on this solution, single-beam two-dimensional beamforming can be extended to multi-beam beamforming of any quantity (that is, not limited to dual-beam) based on an application scenario and an application requirement of the system, thereby improving flexibility and applicability of the beamforming system provided in this application. In other words, based on the foregoing solution, this application not only can be applied to single-beam beamforming, but also can be extended to multi-beam beamforming, thereby ensuring application in a multi-beam beamforming scenario.

With reference to the first aspect, in some implementations of the first aspect, the third optical diffraction module includes a third optical switch and a third optical diffraction device, the fourth optical diffraction module array includes a fourth optical switch array and a fourth optical diffraction device array, each fourth optical diffraction module includes one fourth optical switch and one fourth optical diffraction device, a plurality of output ports of the third optical switch are in one-to-one correspondence with a plurality of input ports of the third optical diffraction device, a plurality of output ports of the third optical diffraction device are in one-to-one correspondence with input ports of a plurality of fourth optical switches in the fourth optical switch array, and a plurality of output ports of each fourth optical switch are in one-to-one correspondence with a plurality of input ports of a corresponding fourth optical diffraction device. The third optical switch is configured to receive the one path of fifth signal light, and output the one path of fifth signal light to at least one input port of the third optical diffraction device; the third optical diffraction device generates the plurality of paths of sixth signal light with the different phases based on the at least one path of fifth signal light received by the at least one input port, and outputs the plurality of paths of sixth signal light to the input ports of the plurality of fourth optical switches of the plurality of fourth optical diffraction modules; each fourth optical switch is configured to receive the one path of sixth signal light, and output the one path of sixth signal light to the plurality of input ports of the corresponding third optical diffraction device; and each fourth optical diffraction device generates the plurality of paths of seventh signal light with the different phases based on the plurality of paths of sixth signal light received by the plurality of input ports.

With reference to the first aspect, in some implementations of the first aspect, the system further includes a second mixer array, and a plurality of output ports of each fourth optical diffraction device are in one-to-one correspondence with input ports of a plurality of mixers in the second mixer array. Each mixer in the second mixer array receives one path of seventh signal light from a corresponding fourth optical diffraction device, and mixes the one path of seventh signal light with local oscillator light to generate one path of second mixed signal light, where the one path of second mixed signal light is used to generate one path of second radio frequency signal.

With reference to the first aspect, in some implementations of the first aspect, the system further includes a third photoelectric detector array, an input port of each third photoelectric detector in the third photoelectric detector array is in one-to-one correspondence with an output port of one mixer in the first mixer array, and the input port of each third photoelectric detector is in one-to-one correspondence with an output port of one mixer in the second mixer array. Each third photoelectric detector is configured to receive one path of first mixed signal light and one path of second mixed signal light through a space division multiplexing fiber, convert the one path of first mixed signal light into one path of third electrical signal, and convert the one path of second mixed signal light into one path of fourth electrical signal; or each third photoelectric detector is a segmented photoelectric detector, and is configured to receive one path of first mixed signal light and one path of second mixed signal light, convert the one path of first mixed signal light into one path of third electrical signal, and convert the one path of second mixed signal light into one path of fourth electrical signal.

With reference to the first aspect, in some implementations of the first aspect, the system further includes a second wavelength division multiplexer array, an input port of each second wavelength division multiplexer in the second wavelength division multiplexer array is in one-to-one correspondence with an output port of one mixer in the first mixer array, and the input port of each second wavelength division multiplexer is in one-to-one correspondence with an output port of one mixer in the second mixer array. Each second wavelength division multiplexer is configured to receive one path of first mixed signal light and one path of second mixed signal light, and convert the one path of first mixed signal light and the one path of second mixed signal light to generate one path of second wavelength division multiplexing signal light.

Based on the foregoing solution, the second wavelength division multiplexer is introduced, so that a transmission capacity and efficiency of an optical fiber can also be greatly improved, and use costs of the optical fiber can be reduced.

With reference to the first aspect, in some implementations of the first aspect, the system further includes a fourth photoelectric detector array, and input ports of a plurality of photoelectric detectors in the fourth photoelectric detector array are in one-to-one correspondence with output ports of a plurality of second wavelength division multiplexers in the second wavelength division multiplexer array. Each fourth photoelectric detector is configured to receive the one path of second wavelength division multiplexing signal light from the corresponding second wavelength division multiplexer, and convert the one path of second wavelength division multiplexing signal light into one path of fifth electrical signal.

With reference to the first aspect, in some implementations of the first aspect, the first optical diffraction device includes a first Rotman lens, and the second optical diffraction device array includes a second Rotman lens array. It may be understood that, when the system further includes at least one third optical diffraction device and at least one fourth optical diffraction device array, the third optical diffraction device and the at least one fourth optical diffraction device array may include a third Rotman lens and a fourth Rotman lens array.

According to a second aspect, an embodiment of this application provides a wireless communication base station. The base station includes an active antenna unit (active antenna unit, AAU), and the AAU includes the beamforming system provided in any one of the first aspect and the implementations of the first aspect.

### BRIEF DESCRIPTION OF DRAWINGS

FIG. 1 is a diagram of a structure of a beamforming apparatus integrating an optical waveguide;
FIG. 2 is a diagram of a structure of a beamforming apparatus based on an optical frequency comb light source and a wavelength division multiplexing architecture;
FIG. 3 is a diagram of a structure of a beamforming system 300 according to an embodiment of this application;
FIG. 4 is a diagram of a structure of a beamforming system 400 according to an embodiment of this application;
FIG. 5 is a diagram of a structure of a first signal light generation apparatus 500 applicable to an embodiment of this application;
FIG. 6 is a diagram of a structure of another first signal light generation apparatus 600 applicable to an embodiment of this application;
FIG. 7 is a diagram of a structure of a radio frequency signal generation apparatus 700 applicable to an embodiment of this application;
FIG. 8(a) to FIG. 8(c) are a diagram of a structure of a beamforming system 800 according to an embodiment of this application;
FIG. 9 is a diagram of a structure of a beamforming system 900 according to an embodiment of this application;
FIG. 10 is a diagram of a structure of a beamforming system 1000 according to an embodiment of this application;
FIG. 11 is a schematic sectional view of several space division multiplexing fibers applicable to an embodiment of this application;
FIG. 12 is a diagram of a structure of a segmented detector applicable to an embodiment of this application;
FIG. 13 is a diagram of a structure of a beamforming system 1300 according to an embodiment of this application;
FIG. 14 is a diagram of a structure of a beamforming system 1400 according to an embodiment of this application;
FIG. 15 is a diagram of a structure of a beamforming system 1500 according to an embodiment of this application; and
FIG. 16 is a diagram of a structure of an example base station according to an embodiment of this application.

### DESCRIPTION OF EMBODIMENTS

The following describes technical solutions of this application with reference to accompanying drawings.

For ease of understanding embodiments of this application, the following descriptions are provided.

First, in the following text descriptions or accompanying drawings in embodiments of this application, terms such as "first", "second", and "third" and various numbers are merely used for differentiation for ease of description, but do not necessarily describe a specific order or sequence, and are not intended to limit the scope of embodiments of this application. For example, different optical switches are distinguished, different Rotman lenses are distinguished, or different mixers are distinguished.

Second, in the following embodiments of this application, the term "include" and any variant mean to cover non-exclusive inclusion. For example, a process, method, system, product, or device that includes a series of steps or units is not necessarily limited to those steps or units that are expressly listed, but may include another step or unit not expressly listed or inherent to such a process, method, product, or device.

Third, in embodiments of this application, terms such as "example" or "for example" are used to represent giving an example, an illustration, or a description. Any embodiment or design scheme described with "example" or "for example" should not be explained as being more preferred or having more advantages than another embodiment or design scheme. The terms such as "example" or "for example" are used to present a related concept in a specific manner for ease of understanding.

For ease of understanding, technical terms in this application are first briefly explained and described.

### 1. Beamforming (beamforming)

Beamforming is also referred to as beam forming or spatial filtering, and is a signal processing technology that uses a sensor array to send and receive signals directionally. In the beamforming technology, a parameter of a basic unit of a phased array is adjusted, so that signals at some angles experience constructive interference, and signals at some other angles experience destructive interference. Beamforming can be applied to both a signal transmit end and a signal receive end. At the transmit end, a beamformer controls a phase and a signal amplitude of each transmitting apparatus, to obtain a required pattern of constructive and destructive interference from a transmitted signal wave array. At the receive end, signals received by different receivers are combined in an appropriate manner, to obtain an expected signal radiation pattern.

### 2. Rotman (Rotman) lens

The Rotman lens is a commonly used multi-beam forming network, determines a beam direction by using a difference between optical paths from a beam port to units on an antenna array, and is a true time delay (true time delay, TTD) beamformer. Theoretically, the beam direction is independent of an operating frequency, and the beam direction is fixed when a frequency changes, so that a relatively wide frequency band can be implemented. There are advantages such as stable directions of a plurality of beams, easy implementation of wide-angle coverage, and a simple structure.

The Rotman (Rotman) lens is applicable to a microwave and millimeter wave beamforming network and a multi-beam antenna feeder system. A substrate integrated waveguide multi-beam antenna including the Rotman lens may be applied to a microwave and millimeter wave multi-beam system and a smart antenna, and may bring advantages such as improving communication channel quality, reducing transmit power and a bit error rate, and reducing multipath interference. Reprinting should retain the URL of this specification: https://baike.86580.cn/article/115437.html

### 3. Optical switch

The optical switch is an optical device that has one or more optional transmission ports. A function of the optical switch is to perform physical switching or a logical operation on an optical signal in an optical transmission line or an integrated optical path. The optical switch is an optical path controller that converts an optical path.

### 4. Mixing solution

The mixing solution in this application may be classified into a homodyne solution or a heterodyne solution based on a local oscillator light frequency being unequal or equal to a signal light frequency. In the homodyne solution, an intermediate-frequency signal is obtained after optical-to-electrical conversion is performed on an optical signal, and needs to be subjected to secondary demodulation for conversion into a baseband signal. In the heterodyne solution, an optical signal is directly converted into a baseband signal through optical-to-electrical conversion without secondary demodulation. However, a local oscillator light frequency needs to strictly match a signal light frequency, and phases of local oscillator light and signal light need to be locked.

### 5. Active antenna unit AAU

In a 5G communication system, a remote radio unit (remote radio unit, RRU) in 4G and an original passive antenna are integrated to form the AAU, thereby simplifying site deployment, reducing feeder complexity, reducing a transmission loss, and improving network performance.

A beamforming system provided in this application can be applied to an AAU in a network device in a wireless communication system, and may be further applied to fields and industries such as phased array radar, satellite navigation and positioning, laser surgery medical treatment, autonomous driving, imaging and geographic exploration, and artificial intelligence.

In a wireless communication network, a beamforming technology has become a very crucial technology, and is used to improve a signal-to-noise ratio, a transmission distance, and the like of a link signal. With development of 5G+ and future 6G technologies, a wireless frequency band gradually develops toward a high frequency band. To effectively reduce a quantity of antennas and improve beam quality, a currently used solution is a full connection solution. Full connection is classified into electrical full connection and optical full connection. Because the electrical full connection has relatively large crosstalk when circuits are cross-connected, and a system scale is large, it is difficult to implement the electrical full connection. Compared with the electrical full connection, the optical full connection can effectively utilize features of polarization, a wavelength, and pattern reuse of light to expand a traffic channel, and has become a research hotspot.

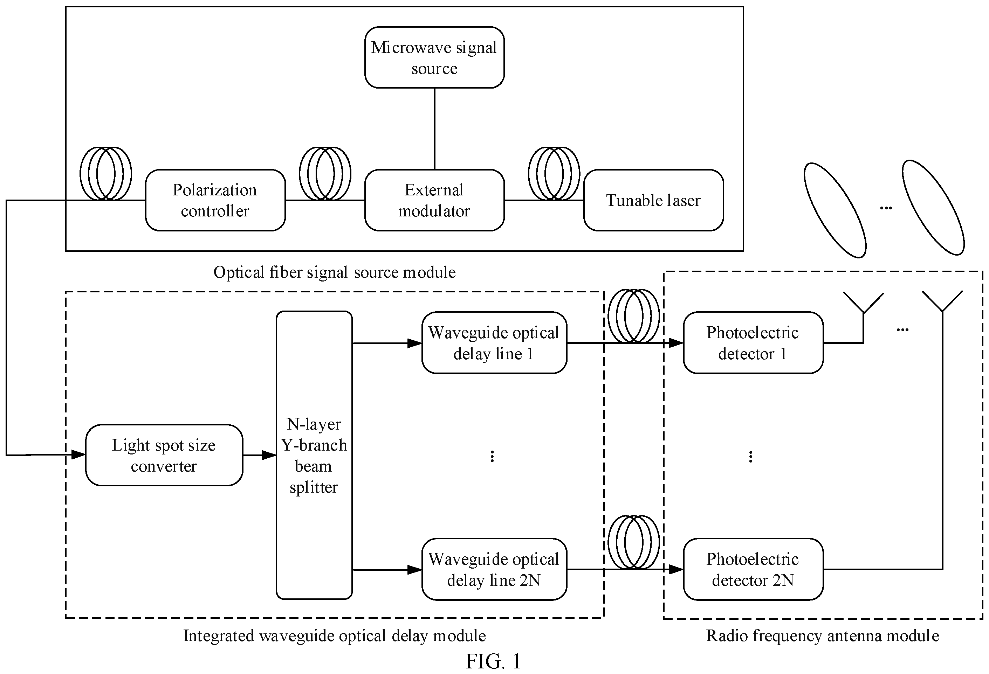

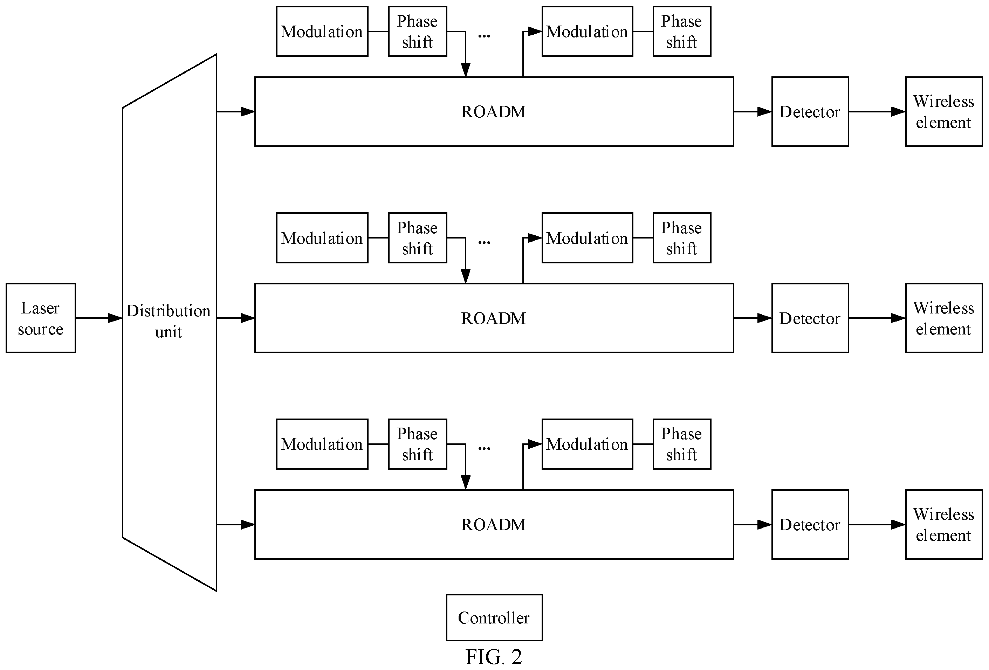

In current optical full connection solutions, one solution is to use a tunable laser as a light source. A plurality of fiber Bragg gratings with different center wavelengths are written into a waveguide optical delay line, and fiber Bragg gratings with a same center wavelength are located at different locations in adjacent waveguide optical delay lines. An output wavelength of the laser is selected to control a transmission delay of an optical signal, so as to implement beamforming on a microwave signal. This process is shown in FIG. 1. However, in this solution, beamforming is implemented by using different wavelengths corresponding to different delay combinations. Therefore, a plurality of beams cannot work simultaneously, only one beam can be sent, and a single chip cannot implement full connection. Another solution is shown in FIG. 2. A laser emits frequency comb laser light with an equal wavelength interval, and one or more wavelengths are distributed to branches through a distribution unit. Each wavelength is dropped to a modulator and a phase shift unit device in a reconfigurable optical add-drop multiplexer (reconfigurable optical add-drop multiplexer, ROADM) device, to complete modulation and phase shift of a signal. Then, the signal is input to a detector end, and a radio frequency signal at a corresponding frequency is output through heterodyne detection, and is finally sent through an antenna element. However, in this solution, a radio frequency source generated by an optical frequency comb is introduced in a beamforming solution design, causing an increase in a quantity of used modulators and high system complexity. In addition, there is also a beamforming solution based on a Blass matrix. A phase relationship between paths is adjusted by using a structure of an optical Mach-Zehnder interferometer network, and then an optical phase is shifted to a radio frequency signal by using a coherent detection solution, to implement a phase change of the radio frequency signal, thereby achieving beamforming. However, the phase change in the Blass matrix is implemented through heating, and a beam scanning speed cannot meet a product indicator requirement. In addition, there are a large quantity of heaters in the system, resulting in a large system volume.

In view of this, this application provides a beamforming solution, to reduce a device scale in a beamforming system, reduce system power consumption, improve a system response speed, and achieve good system performance.

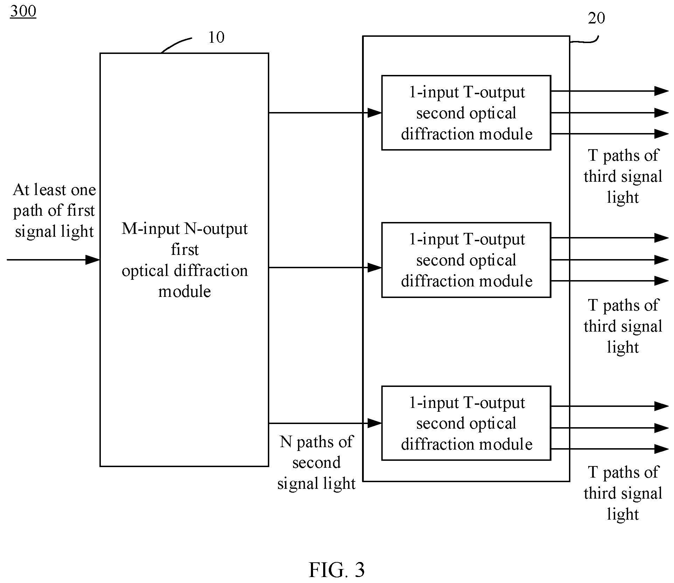

FIG. 3 is a diagram of a structure of a beamforming system 300 according to an embodiment of this application. As shown in FIG. 3, the beamforming system includes a first optical diffraction module 10 and a second optical diffraction module array 20. The first optical diffraction module 10 has at least one input port and a plurality of output ports, the second optical diffraction module array 20 includes a plurality of second optical diffraction modules, and each second optical diffraction module has one input port and a plurality of output ports. Specifically, the first optical diffraction module 10 is configured to receive at least one path of first signal light, and generate a plurality of paths of second signal light with different phases based on the at least one path of first signal light. Each second optical diffraction module in the second optical diffraction module array 20 is configured to receive one path of second signal light in the plurality of paths of second signal light output by the first optical diffraction module 10, and generate a plurality of paths of third signal light with different phases based on the one path of received second signal light, where the plurality of paths of third signal light are used to generate a plurality of paths of first radio frequency signal. In FIG. 3, the first optical diffraction module 10 has M input ports and K output ports, M is an integer greater than or equal to 1, and K is an integer greater than 1. The second optical diffraction module array 20 includes K second optical diffraction modules, each second optical diffraction module has one input port and T output ports, and T is an integer greater than 1.

It should be noted that, in this embodiment of this application, the first optical diffraction module 10 can generate the plurality of paths of second signal light with the different phases based on incident light. Therefore, the first optical diffraction module 10 is configured to implement beamforming on the incident light in a first direction. In addition, each second optical diffraction module in the second optical diffraction module array 20 continues to generate the plurality of paths of third signal light with the different phases based on the one path of second signal light emitted by the first optical diffraction module 10, to implement beamforming on the incident light in a second direction.

It should be further noted that, when the first optical diffraction module 10 receives a plurality of paths of first signal light, wavelengths of the plurality of paths of first signal light may be the same or may be different. This is not limited in this application. In other words, the beamforming system provided in this application can be used for two-dimensional beamforming on a plurality of pieces of incident signal light with a same wavelength, and can also be used for two-dimensional beamforming on a plurality of pieces of incident signal light with different wavelengths. In addition, this application does not limit frequencies, signal formats, or the like of signals carried on the plurality of paths of first signal light, that is, frequencies, formats, or the like of the plurality of paths of first signal light may be the same, or partially the same, or completely different.

It may be understood that a quantity of second optical diffraction modules in the second optical diffraction module array 20 is at least the same as a quantity of output ports of the first optical diffraction module, that is, the quantity of second optical diffraction modules in the second optical diffraction module array 20 is not less than the quantity of output ports of the first optical diffraction module, so that the plurality of paths of second signal light emitted from the first optical diffraction module 10 can be received by a plurality of corresponding second optical diffraction modules.

It should be noted that, in the solution of this application, the first optical diffraction module and the second optical diffraction module may be respectively integrated into two chips, or may be jointly integrated into a same chip, and two-dimensional beamforming is implemented through on-chip cascading.

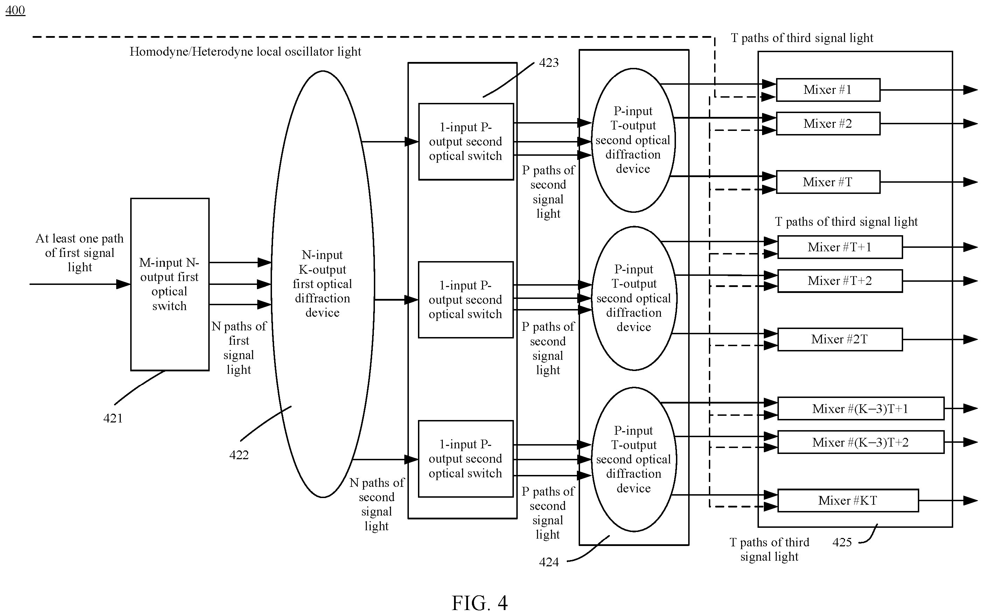

FIG. 4 is a diagram of a structure of a beamforming system 400 according to an embodiment of this application. As shown in FIG. 4, the beamforming system 400 includes a first optical switch 421, a first optical diffraction device 422, a second optical switch array 423, and a second optical diffraction device array 424. The first optical switch 421 and the first optical diffraction device 422 form the first optical diffraction module 10 shown in FIG. 3. The second optical switch array 423 and the second optical diffraction device array 424 form the second optical diffraction module array 20, and each second optical diffraction module includes one second optical switch and one second optical diffraction device. The first optical switch 421 has M input ports and N output ports, and the N output ports of the first optical switch 421 are respectively in one-to-one correspondence with N input ports of the first optical diffraction device 422, where M is an integer greater than or equal to 1, and N is an integer greater than or equal to 1. K output ports of the first optical diffraction device 422 are in one-to-one correspondence with input ports of K second optical switches in the second optical switch array 423, and P output ports of each optical switch in the K second optical switches are in one-to-one correspondence with input ports of K second optical diffraction devices in the second optical diffraction device array 424, where K is an integer greater than 1, and P is an integer greater than 1.

Specifically, the first optical switch 421 is configured to receive the at least one path of first signal light, and output the at least one path of first signal light to at least one input port in the N input ports of the first optical diffraction device 422. The first optical diffraction device 422 is configured to: after changing a phase of the at least one path of first signal light, respectively input K pieces of second signal light with different phases to the K second optical switches. Each second optical switch in the K second optical switches outputs one path of received second signal light to P input ports of a corresponding second optical diffraction device. Each second optical diffraction device in the K second optical diffraction devices changes phases of P paths of received second signal light, and then outputs T paths of third signal light, where the T paths of third signal light are used to generate T paths of radio frequency signal.

In an implementation, the T paths of radio frequency signal are generated by T mixers. In this case, the system 400 further includes a mixer array 425, and T output ports of each second optical diffraction device in the K second optical diffraction devices are in one-to-one correspondence with input ports of the T mixers in the mixer array 425, where T is an integer greater than 1. Specifically, after generating the T paths of third signal light, each second optical diffraction device in the K second optical diffraction devices outputs the T paths of third signal light with different phases to the T corresponding mixers. Each mixer in K*T mixers mixes one path of third signal light received from a corresponding second optical diffraction device with local oscillator light, and outputs one path of mixed signal. In this case, the K*T mixers generate K*T paths of mixed signal, and the K*T paths of mixed signal are used to generate K*T paths of radio frequency signal, to implement scanning of K*T two-dimensional scanning beams.

Specifically, the first optical switch 421 controls one or all of the N output ports based on a requirement for a quantity of beam scanning angles in the first direction, that is, the first optical switch 421 inputs at least one path of first signal light to at least one input port of the first optical diffraction device 422 based on a requirement. Then, the first optical diffraction device 422 generates, based on the at least one port to which the first signal light is input, a plurality of paths of second signal light with different phases whose quantity is the same as that of output ports of the first optical diffraction device 422. To be specific, the first optical diffraction device 422 generates K paths of second signal light with different phase differences, and respectively outputs the K paths of second signal light to the K second optical switches in the second optical switch array 423. Subsequently, the K second optical switches each control, based on a requirement for a quantity of beam scanning angles in the second direction, at least one output port in the P output ports to input at least one path of second signal light to at least one input port of a corresponding second optical diffraction device. After receiving at least one path of second signal light from a corresponding second optical switch, each second optical diffraction device in the K second optical diffraction devices generates T paths of third signal light with different phases based on at least one port to which the second signal light is input, and inputs the T paths of third signal light with the different phases to the T mixers. Then, the K*T mixers respectively mix received third signal light with different phases with local oscillator light, to generate K*T paths of mixed signal light. The K*T paths of mixed signal are used to generate K*T two-dimensional scanning beams that can implement scanning in both a vertical direction and a horizontal direction.

It should be noted that a quantity of input signals of an optical diffraction device determines an angle and a quantity of beam scanning in one dimension. This is because different input ports of the optical diffraction device may correspond to different phases of output signals, and a combination of different input ports may correspond to a combination of different phases of output signal light. For example, when a same path of input signal light is input from different input ports of the optical diffraction device, due to a change of the input ports, phases of signal light output by all output ports of the optical diffraction device each time change. When a plurality of paths of input signal light are input from a plurality of different input ports of the optical diffraction device, phases of signal light output by all output ports of the optical diffraction device each time also vary. Therefore, an input port of signal light that is input to the optical diffraction device each time in the system may be controlled based on a quantity and an angle requirement of final scanning beams. Because there are two stages of optical diffraction devices (for example, the first optical diffraction device 422 and the second optical diffraction device array 424 in FIG. 4) in the beamforming system provided in this application, an input of a lens at each stage is controlled, to implement two-dimensional beamforming on a transmit beam.

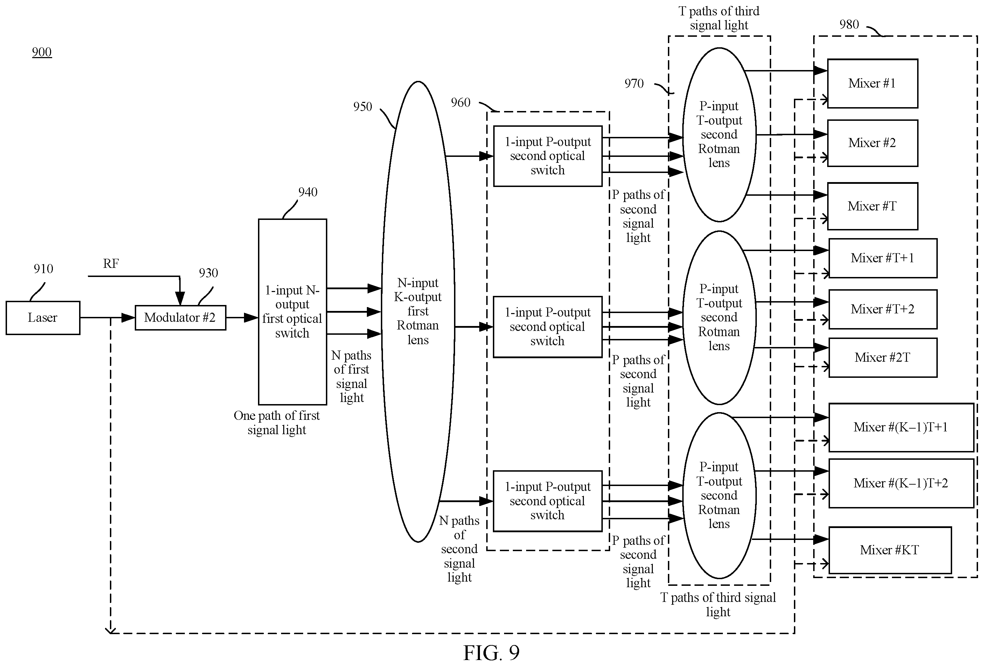

Optionally, the first optical switch 421 is a single-input single-output optical switch, or a single-input multiple-output optical switch, or a multiple-input multiple-output optical switch. This is not limited in this application. For example, when the first optical switch 421 is a single-input single-output optical switch or a single-input multiple-output optical switch, the solution is a single-beam beamforming solution (the following embodiment shown in FIG. 9). In this case, the first optical switch 421 receives one path of first signal light, and selects one output port for the one path of first signal light based on a required angle of a scanning beam in a one-dimensional direction, so that the one path of first signal light enters one input port of the first optical diffraction device along the output port, thereby implementing configuration of the scanning beam in the one-dimensional direction. Then, an angle of a scanning beam in another one-dimensional direction is implemented by using a second optical diffraction device, to achieve a beamforming effect in two-dimensional directions. Similarly, when the first optical switch 421 is a single-input multiple-output optical switch or a multiple-input multiple-output optical switch, a plurality of output ports of the first optical switch 421 determine a plurality of input ports of the first optical diffraction device, and the plurality of input ports of the first optical diffraction device determine a configuration of a scanning beam in a one-dimensional direction. In addition, a plurality of input ports of the second optical diffraction device determine a configuration of a scanning beam in another one-dimensional direction.

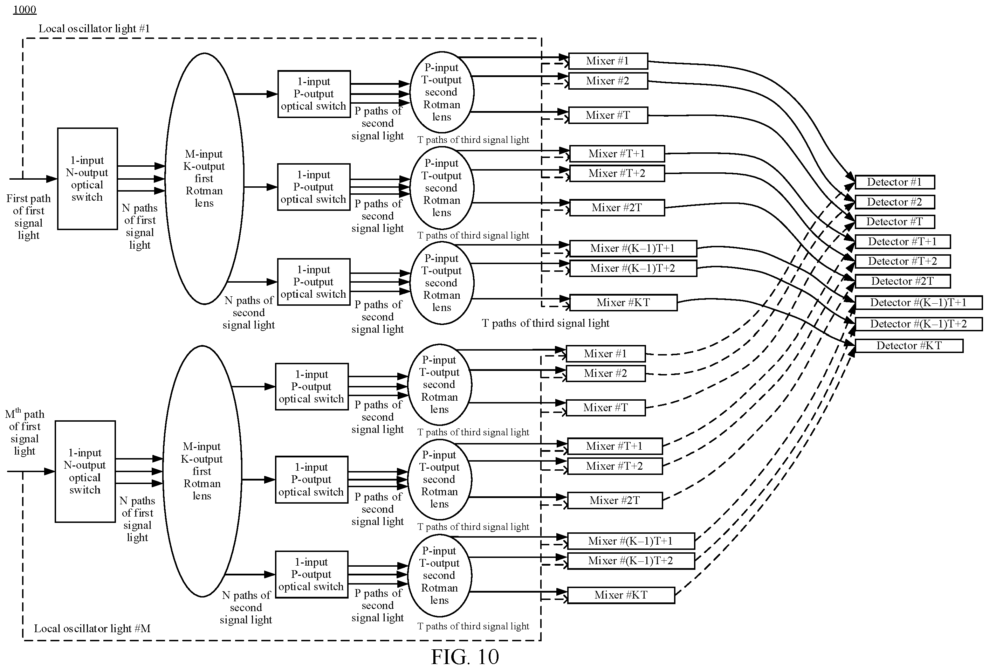

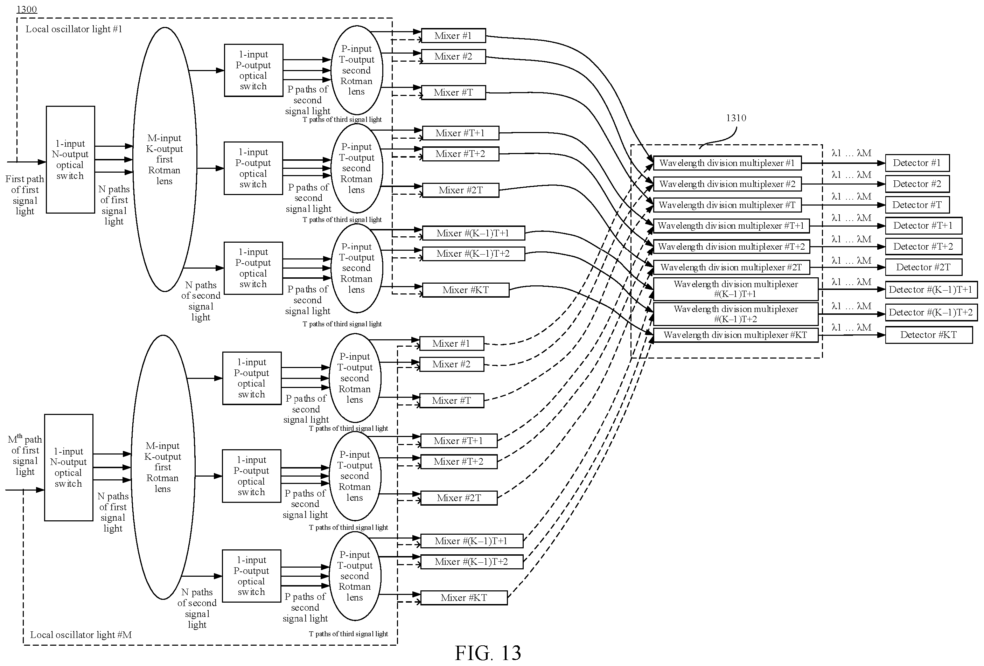

It may be understood that, if the first optical switch 421 is a single-input optical switch (including single-input single-output or single-input multiple-output), to implement a multi-beam beamforming solution, a plurality of structures shown in FIG. 4 may be introduced in the system, so that input wavelengths of each single-beam system are the same (in the following embodiment shown in FIG. 10, in this case, M paths of first signal light are from a same laser or from lasers with a same wavelength) or different (in the following embodiment shown in FIG. 13, in this case, M paths of first signal light are from M lasers with different wavelengths), thereby extending a single-beam beamforming solution to a multi-beam beamforming solution.

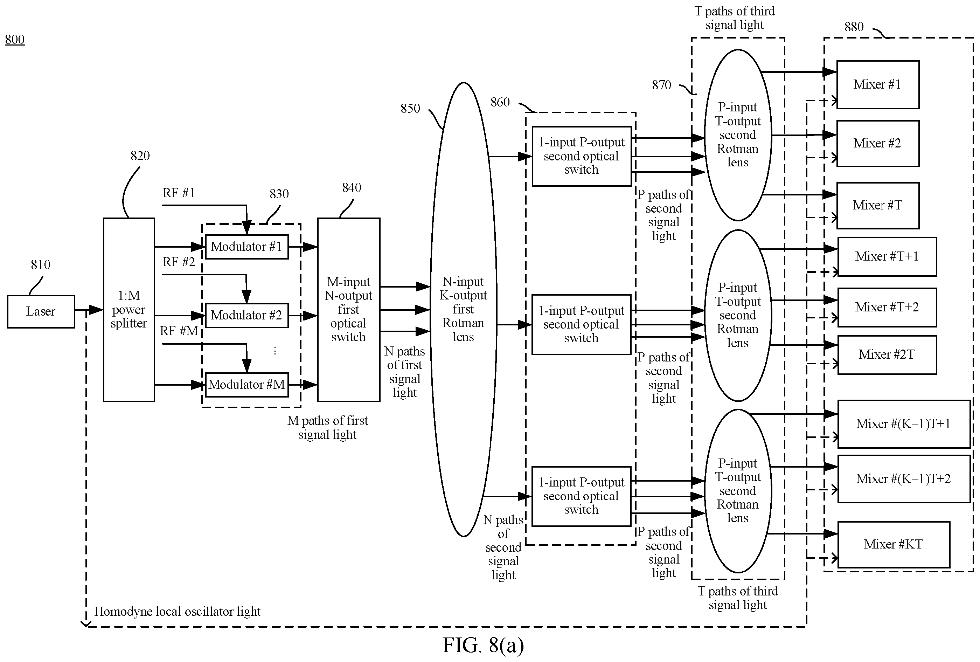

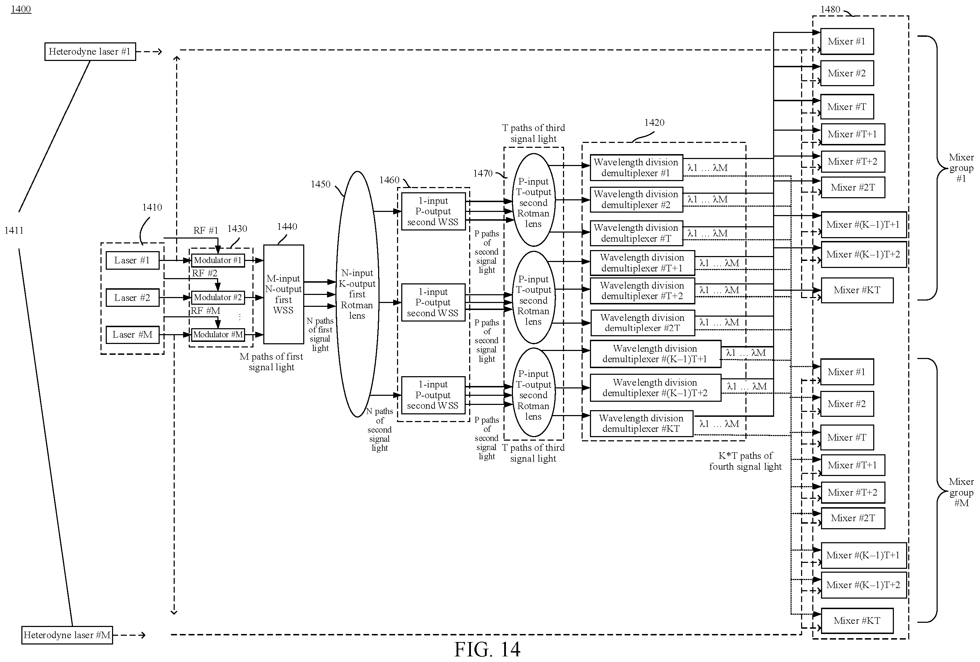

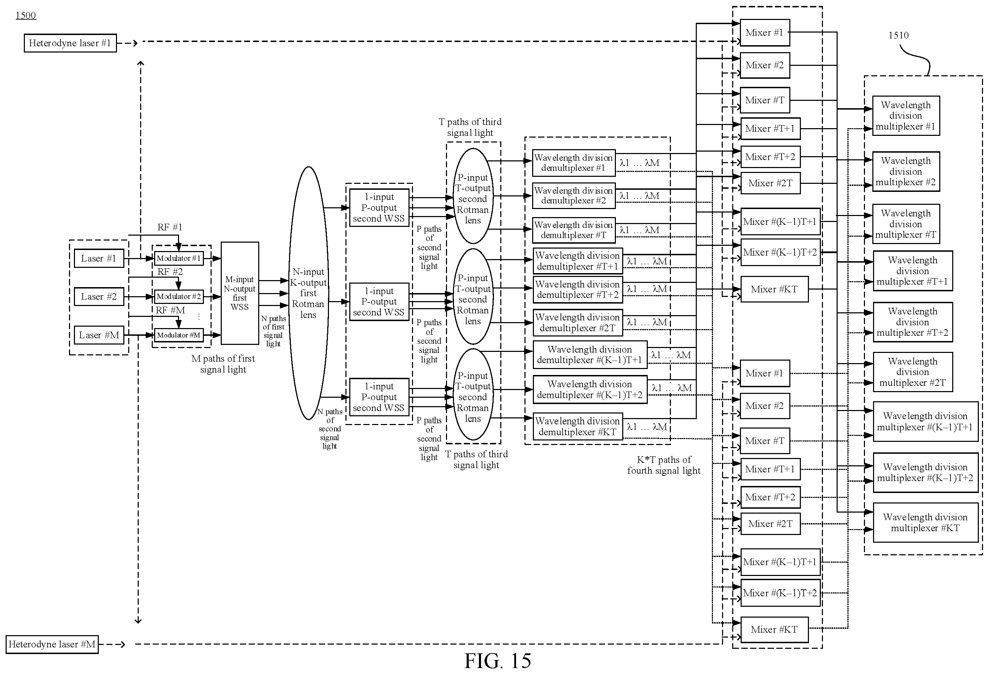

Alternatively, if the first optical switch 421 is a multiple-input multiple-output optical switch, the first optical switch 421 may input a maximum of M paths of first signal light. When wavelengths of the M paths of first signal light are the same, a power splitter (or an optical splitter, a beam splitter, or the like) may be used to split M paths from light beams emitted by a same laser (as shown in the following embodiment in FIG. 8(a) to FIG. 8(c)), and then the M paths of first signal light are generated through modulation by M modulators. Modulation frequencies of the M modulators may be the same or may be different, that is, a same radio frequency signal or different radio frequency signals may be loaded on M paths of light beams with a same wavelength. When different radio frequency signals are loaded, frequencies of the M radio frequency signals may be different, or formats of the M radio frequency signals may be different. This is not limited in this application. Alternatively, when wavelengths of the M paths of first signal light are different, M paths of light beams may be generated by M lasers with different emergent wavelengths, and then the M paths of first signal light are generated through M modulators (as shown in the following embodiments in FIG. 14 and FIG. 15). Modulation frequencies of the M modulators may be the same or may be different, that is, a same radio frequency signal or different radio frequency signals may be loaded on M paths of light beams with a same wavelength.

Optionally, the first optical switch 421 and the second optical switch array 423 are optical switches without a wavelength selection function. In this case, the at least one path of first signal light received by the first optical switch 421 has a same wavelength, and the N paths of second signal light output by the first optical diffraction device 422 have a same wavelength, that is, a wavelength of one path of second signal light received by each second optical switch is the same, so that a wavelength of third signal light received by each second optical diffraction device is the same as the wavelength of the at least one path of first signal light.

Alternatively, the first optical switch 421 and the second optical switch array 423 are wavelength selective switches (wavelength selective switch, WSS). In this case, wavelengths of a plurality of paths of signal received by the first optical switch 421 are different, and each path of signal light in the N paths of second signal light output by the first optical diffraction device 422 includes all wavelengths, that is, one path of second signal light received by each second optical switch includes all the wavelengths, so that an input of each second optical diffraction device includes all the wavelengths.

Optionally, when wavelengths of a plurality of pieces of first signal light input by the first optical switch 421 are different, the system shown in FIG. 4 may further include a wavelength division demultiplexer array (the following embodiment shown in FIG. 14). The wavelength division demultiplexer array is located between the second optical diffraction device array 424 and the mixer array 425. A plurality of output ports of each second optical diffraction device correspond to input ports of a plurality of wavelength division demultiplexers in the wavelength division demultiplexer array 426, a plurality of output ports of each wavelength division demultiplexer are connected to input ports of a plurality of mixers, and each wavelength division demultiplexer is configured to demultiplex each path of third signal light into a plurality of paths of fourth signal light with different wavelengths. To be specific, before entering each mixer, each path of third signal light output by the second Rotman first passes through the wavelength division demultiplexer to obtain signal light corresponding to different wavelengths, and then the signal light is input to the corresponding mixer for mixing with local oscillator light.

When the system shown in FIG. 4 includes the wavelength division demultiplexer array, optionally, the system may further include a wavelength division multiplexer array (the following embodiment shown in FIG. 15). An input port of each wavelength division multiplexer in the wavelength division multiplexer array is connected to output ports of a plurality of mixers. Each wavelength division multiplexer is configured to generate one path of wavelength division multiplexing signal light by using a plurality of paths of mixed signal light output by the plurality of mixers. The one path of generated wavelength division multiplexing signal light is used to generate one path of radio frequency signal.

Optionally, in the solution of this application, a mixing manner of each mixer in the mixer array 425 is a homodyne solution or a heterodyne solution. The homodyne solution indicates that a wavelength of local oscillator light that is input to the mixer is the same as a wavelength of signal light that is received by the mixer from a corresponding second optical diffraction device. In this case, a frequency of a radio frequency signal of a beam emitted by the system is the same as a frequency of a radio frequency signal carried in at least one path of first signal light that is input to the first optical switch 421. Because the frequency of the radio frequency signal carried in the at least one path of first signal light that is input to the first optical switch 421 is determined by a frequency of a radio frequency signal of a modulator that generates the at least one path of first signal light, in the homodyne solution, the frequency of the radio frequency signal of the beam emitted by the system is consistent with the frequency of the radio frequency signal of the modulator. For example, the local oscillator light in the homodyne solution may be split by an optical splitter from emergent light of a laser that generates the first signal light. The heterodyne solution indicates that a wavelength of local oscillator light that is input to the mixer is different from a wavelength of signal light that is received by the mixer from a corresponding second optical diffraction device. In this case, a frequency of a radio frequency signal of a beam emitted by the system is related to a frequency of a radio frequency signal of a modulator that generates the first signal light and a difference between a frequency of a laser that generates the first signal light and a frequency for generating the local oscillator signal light. For example, the local oscillator light in the heterodyne solution may be generated by re-introducing a new light source that generates heterodyne local oscillator light. It may be understood that, when a wavelength of the heterodyne local oscillator light is the same as a wavelength of a laser that generates at least one path of first signal light in the heterodyne solution, the heterodyne solution may be understood as a homodyne solution.

Based on the foregoing solution, in the solution of this application, two-dimensional beamforming is implemented by cascading two stages of optical switches and lenses. In the solution of this application, the optical switch is used to implement path switching, so that a switching rate of the system is improved. In addition, in the solution of this application, a single optical diffraction device can be used to meet multi-channel multi-beam phase shift, thereby greatly reducing a device scale of the system.

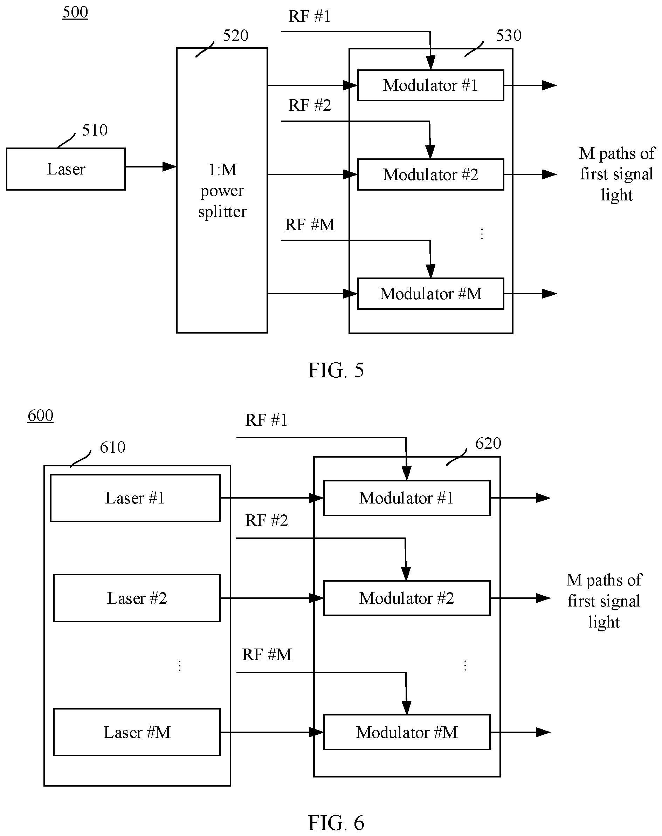

When the at least one path of first signal light received by the first optical switch 421 has a same wavelength, for example, FIG. 5 is a diagram of a structure of a first signal light generation apparatus 500 applicable to an embodiment of this application. Specifically, as shown in FIG. 5, the first signal light generation apparatus 500 includes a laser 510, a 1:M power splitter 520, and M modulators 530. The laser 510 is configured to generate a beam of laser light, and output the beam of laser light to the 1:M power splitter 520. The 1:M power splitter 520 splits the received laser light into M paths of laser light, and respectively outputs the M paths of laser light to the M modulators. After modulating one path of received laser light, each of the M modulators outputs the laser light to an input port of the first optical switch 421 shown in FIG. 4.

It should be noted that the M modulators may modulate a received light beam in a manner such as electro-optic modulation, acousto-optic modulation, or magneto-optic modulation. This is not limited in this application. For example, when the M modulators use the electro-optic modulation manner, a voltage of a radio frequency (radio frequency, RF) signal is loaded on the modulator, so that some physical properties of the modulator change. When laser light passes through the modulator, some parameters of a light wave are modulated, to generate a light wave carrying the radio frequency signal, that is, generate signal light. In addition, frequencies of electrical signals loaded by the M modulators onto a light wave may be the same or may be different, and formats of the electrical signals may be the same or may be different. This is not limited in this application.

It should be noted that, when the first signal light generation apparatus 500 is configured to generate one path of first signal light, the 1:M power splitter 520 may not be disposed in the first signal light generation apparatus 500.

When the at least one path of first signal light received by the first optical switch 421 has different wavelengths, for example, FIG. 6 is a diagram of a structure of another first signal light generation apparatus 600 applicable to an embodiment of this application. As shown in FIG. 6, the signal light generation apparatus includes M lasers 610 (that is, a laser #1 to a laser #M in FIG. 6) and M modulators 620 (that is, a modulator #1 to a modulator #M in FIG. 6), and an output port of each laser corresponds to an input port of one modulator. Each laser in the M lasers 610 is configured to generate one beam of laser light, and output the beam of laser light to a corresponding modulator. After modulating one path of received laser light, each of the M modulators outputs the laser light to an input port of the first optical switch 421 shown in FIG. 4.

Similarly, the M modulators may modulate a received light beam in a manner such as electro-optic modulation, acousto-optic modulation, or magneto-optic modulation. This is not limited in this application. Frequencies of electrical signals loaded by the M modulators onto a light wave may be the same or may be different, and formats of the electrical signals may be the same or may be different. This is not limited in this application.

It should be noted that, when the signal light generation apparatus 600 is configured to generate one path of first signal light, the signal apparatus 600 has only one laser and one modulator.

It may be understood that the first signal light generation apparatus 600 may be alternatively configured to generate M paths of first signal light with a same wavelength. In this case, the M lasers 610 are configured to generate the M paths of first signal light with the same wavelength.

In addition, the first signal light generation apparatus in the beamforming system provided in this application is not limited to the form in FIG. 5 or FIG. 6. That is, FIG. 5 and FIG. 6 show merely example embodiments of the first signal light generation apparatus applicable to the beamforming system provided in this application. The first signal light generation apparatus applicable to the beamforming system provided in this application may alternatively be in other forms, which are not enumerated in this application.

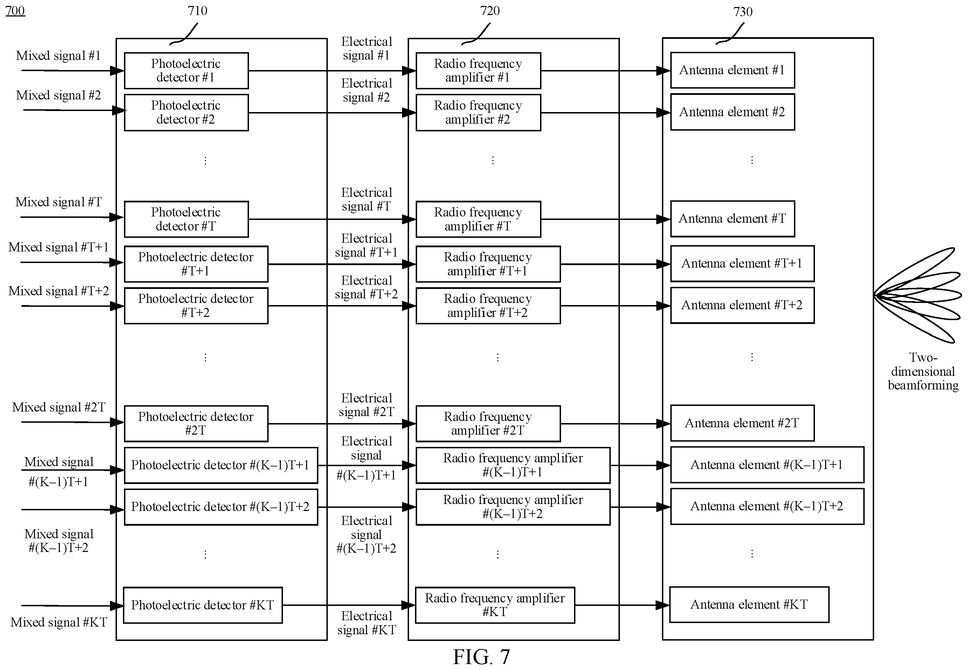

FIG. 7 is a diagram of a structure of a radio frequency signal generation apparatus 700 applicable to an embodiment of this application. The radio frequency signal generation apparatus 700 includes a photoelectric detector array 710, a radio frequency amplifier array 720, and an antenna array 730. When the beam generation apparatus 700 is used in the beamforming system shown in FIG. 4, input ports of K*T photoelectric detectors in the photoelectric detector array 730 are correspondingly connected to output ports of K*T mixers, output ports of the K*T photoelectric detectors are correspondingly connected to input ports of K*T radio frequency amplifiers in the radio frequency amplifier array 720, and output ports of the K*T radio frequency amplifiers are correspondingly connected to K*T antenna elements in the antenna array 730. Specifically, after each mixer outputs a generated mixed signal to a corresponding photoelectric detector, each photoelectric detector converts the received mixed signal into an electrical signal, and outputs the converted electrical signal to a corresponding radio frequency amplifier. Then, each radio frequency amplifier amplifies the received electrical signal, and outputs the amplified electrical signal to a corresponding antenna element. After receiving the electrical signal, the antenna element radiates the electrical signal to the outside.

It should be noted that FIG. 7 shows merely an example embodiment of the radio frequency signal generation apparatus applicable to the beamforming system provided in this application. The beam generation apparatus applicable to this application is not limited to FIG. 7. In another embodiment, the beam generation apparatus may further include another structure, for example, a filter. This falls within the protection scope of this application.

It should be further noted that, in the solution of this application, the optical diffraction device may be a Rotman lens, a Blass lens, or the like. This is not limited in this application. In the following embodiments of various beamforming systems provided in this application in FIG. 8(a) to FIG. 8(c) to FIG. 10 and FIG. 13 to FIG. 15, an optical diffraction device being a Rotman lens is used for detailed description. In addition, in the embodiments of various beamforming systems provided in this application in FIG. 8(a) to FIG. 8(c) to FIG. 10 and FIG. 13 to FIG. 15, a mixing operation is implemented through a mixer.

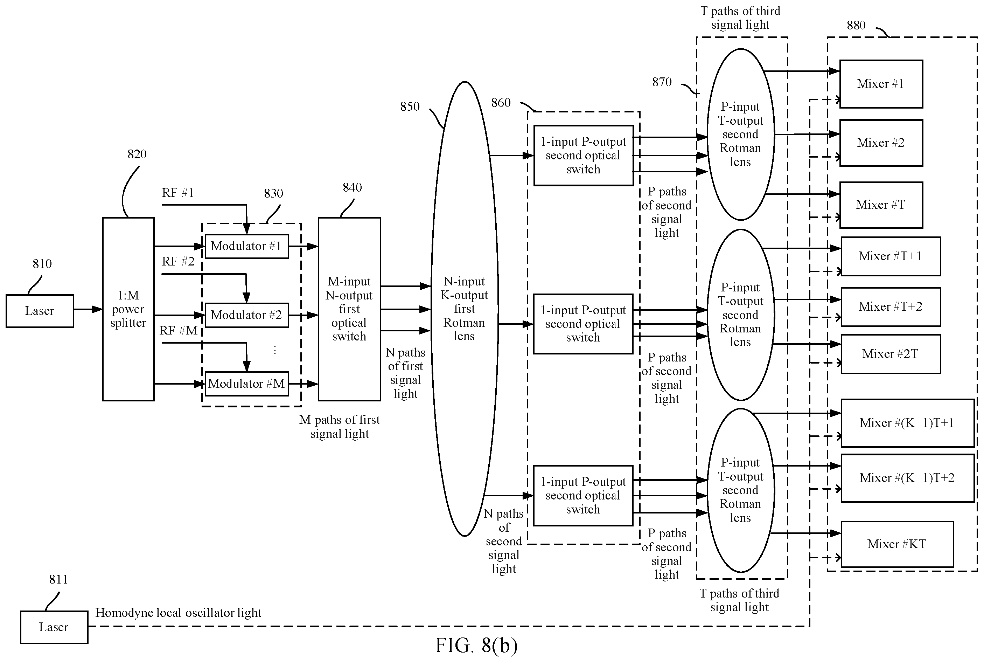

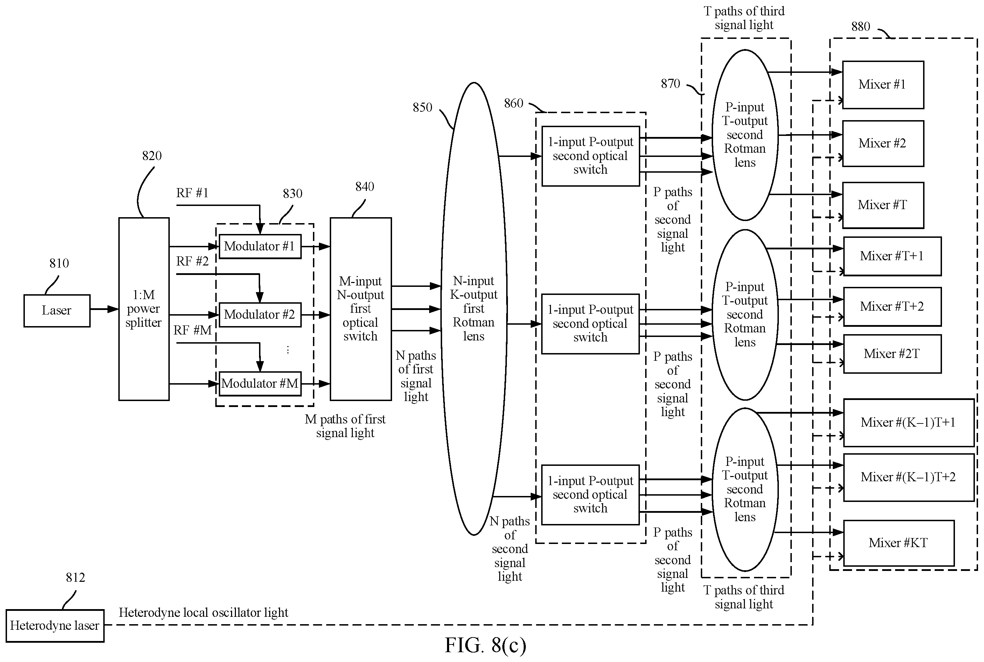

FIG. 8(a) to FIG. 8(c) are a diagram (including FIG. 8(a), FIG. 8(b), and FIG. 8(c)) of a structure of a beamforming system 800 according to an embodiment of this application. It should be noted that the beamforming system 800 is applicable to a scenario in which incident light has a same wavelength and a plurality of paths of first signal light are incident to a first optical switch 840. In other words, in the beamforming system 800, wavelengths of a plurality of paths of first signal light received by the first optical switch 840 are the same. As shown in FIG. 8(a) to FIG. 8(c), a laser 810, a 1:M power splitter 820, a modulator array 830, an M-input N-output first optical switch 840, an N-input K-output first Rotman lens 850, a 1-input P-output second optical switch array 860, a P-input T-output second Rotman lens array 870, and a mixer array 880 that have sequentially connected inputs and outputs are sequentially arranged in the beamforming system 800 in a signal light transmission direction. M is an integer greater than 1, N is an integer greater than 1, K is an integer greater than 1, P is an integer greater than 1, and T is an integer greater than 1. Specifically, the laser 810 generates one path of incident light, and emits the incident light to the 1:M power splitter 820. After receiving the incident light, the 1:M power splitter 820 splits the one path of incident light into M paths of incident light with same power, and respectively inputs the M paths of incident light to M modulators in the modulator array 830. The M modulators each change a frequency of radio frequency or a signal format for one path of received incident light in different manners, to complete spatial forming on the M paths of incident light, so as to generate M paths of first signal light through modulation, and output the M paths of first signal light to M input ports of the first optical switch 840. After receiving the M paths of first signal light, the first optical switch 840 outputs the M paths of first signal light to M input ports of the first Rotman lens 850. After changing phases of the M paths of first signal light, the first Rotman lens 850 generates K paths of second signal light with different phases, and respectively outputs the K paths of second signal light to K second optical switches in the second optical switch array 860. Each second optical switch in the K second optical switches outputs P paths of second signal light by using one path of second signal light. In addition, each second optical switch in the K second optical switches generates the P paths of second signal light, and outputs the P paths of generated second signal light to K second Rotman lenses in the second Rotman lens array 870. After changing phases of the P paths of received second signal light, each second Rotman lens in the K second Rotman lenses outputs T paths of third signal light to T mixers in the mixer array 880. K*T mixers in the mixer array 880 each mix one path of third signal light with local oscillator light, to generate one path of mixed signal light. It may be understood that one path of mixed signal generated by each mixer may be converted into an electrical signal by using the radio frequency signal generation apparatus shown in FIG. 7, to complete two-dimensional beamforming.

It may be understood that each mixer may mix the received third signal light with the local oscillator light by using a homodyne solution or a heterodyne solution. This is not limited in this application. For example, when each mixer mixes the third signal light with the local oscillator light by using the homodyne solution, in some embodiments, the homodyne local oscillator light may be low-power incident light that is split by an optical splitter (not shown in the figure) from incident light emitted by the laser 810, as shown in FIG. 8(a). Alternatively, in some other embodiments, the homodyne local oscillator light may be implemented by using a laser 811 to generate heterodyne local oscillator light having a same wavelength as incident light. In this case, the system further includes the heterodyne laser 811, and the laser 811 is configured to generate homodyne local oscillator light having a same wavelength as that generated by the laser 810, as shown in FIG. 8(b). In some other embodiments, when each mixer mixes the third signal light with the local oscillator light by using the heterodyne solution, the system further includes a laser 812, and the heterodyne local oscillator light is generated by using the laser 812, as shown in FIG. 8(c).

FIG. 9 is a diagram of a structure of a beamforming system 900 according to an embodiment of this application. As shown in FIG. 9, a laser 910, a modulator 930, a 1-input N-output first optical switch 940, an N-input K-output first Rotman lens 950, a 1-input P-output second optical switch array 960, a P-input T-output second Rotman lens array 970, and a mixer array 980 that have sequentially connected inputs and outputs are sequentially arranged in the beamforming system 900 in a signal light transmission direction. N is an integer greater than 1, K is an integer greater than 1, P is an integer greater than 1, and T is an integer greater than 1.

It may be understood that, compared with the system shown in FIG. 8(a) to FIG. 8(c), the beamforming system 900 is applicable to a single-beam two-dimensional scanning scenario. That is, in the beamforming system 900, the first optical switch 940 receives one path of first signal light. For ease of description, for specific functions of the elements, refer to the functions of the elements in FIG. 8(a) to FIG. 8(c). In addition, for other related descriptions of the system, refer to FIG. 8(a) to FIG. 8(c). Details are not described herein again.

In addition, the system 900 may also use a homodyne solution or a heterodyne solution. FIG. 9 merely uses the homodyne solution as an example. When the heterodyne solution is used, the system further includes a heterodyne laser, configured to generate heterodyne local oscillator light. For descriptions of this part, refer to the related part in FIG. 8(a) to FIG. 8(c). Details are not described herein again.

FIG. 10 is a diagram of a structure of a beamforming system 1000 according to an embodiment of this application. Compared with the system 900 shown in FIG. 9, the beamforming system 1000 is applicable to a multi-beam two-dimensional scanning scenario. It may be understood that the system 1000 shown in FIG. 10 may be considered as a multi-beam system generated when the system 900 in FIG. 9 is extended to M beams. Therefore, for related descriptions of specific functions of the elements, a mixing solution (FIG. 10 shows only a homodyne mixing solution, and does not show a heterodyne mixing solution), and the like, refer to FIG. 8(a) to FIG. 8(c) or FIG. 9. Details are not described herein again.

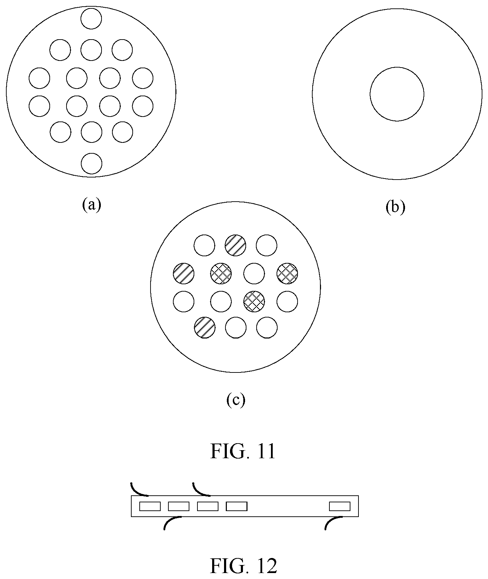

It can be learned from the foregoing descriptions that a mixed signal emitted by a mixer needs to be input to the radio frequency signal generation apparatus shown in FIG. 7. When the beamforming system uses the system 1000 shown in FIG. 10, mixed signals emitted by M groups of K*T mixers need to be input to detectors for optical-to-electrical conversion, to generate electrical signals. To reduce a device scale of the system, as shown in FIG. 10, the M groups of K*T mixers may share K*T detectors. In some embodiments, M paths of mixed signal light output by M mixers may be received through several space division multiplexing fibers shown in FIG. 11, and the M paths of mixed signal light are converted into M paths of electrical signal. For example, in FIG. 11, (a) in FIG. 11 is a schematic sectional view of a multi-core fiber, (b) in FIG. 11 is a schematic sectional view of a few-mode fiber, and (c) in FIG. 11 is a schematic sectional view of a multi-core few-mode fiber. Alternatively, in some other embodiments, the K*T detectors are segmented photoelectric detectors, and are configured to receive M paths of mixed signal light output by M mixers, and convert the M paths of mixed signal light into M paths of electrical signal, as shown in FIG. 12. Alternatively, in some other embodiments, a wavelength division multiplexer array 1310 including K*T wavelength division multiplexers may be arranged in the system. After wavelength division multiplexing signal light is first generated from mixed signal light emitted by the M groups of K*T mixers, detectors perform optical-to-electrical conversion to generate electrical signals. In this case, the system is shown in FIG. 13.

It should be noted that the beamforming system 1000 shown in FIG. 10 may be used in a scenario in which M paths of first signal light have a same wavelength, or may be used in a scenario in which M paths of first signal light have different wavelengths. When the M paths of first signal light have different wavelengths, M paths of third signal received by each detector through a space division multiplexing fiber or received by a segmented detector are M paths of third signal with different wavelengths.

FIG. 13 is a diagram of a structure of a beamforming system 1300 according to an embodiment of this application. It may be understood that a wavelength division multiplexer array 1310 is introduced in the system 1300 based on the system 1000 shown in FIG. 10. Specifically, input ports of each wavelength division multiplexer in the wavelength division multiplexer array 1310 are in one-to-one correspondence with output ports of M mixers, and an output port of each wavelength division multiplexer is in one-to-one correspondence with one input port of K*T detectors, to generate one path of wavelength division multiplexing signal light from M paths of mixed signal light with different wavelengths that are output by the M mixers, and transmit the wavelength division multiplexing signal light to a corresponding detector.

It may be understood that, in the system 1300, a mixing solution may still be a homodyne solution or a heterodyne solution. FIG. 13 shows the homodyne solution. For related descriptions, refer to the foregoing embodiments (such as the embodiment in FIG. 8(a) to FIG. 8(c)). Details are not described herein again.

FIG. 14 is a diagram of a structure of a beamforming system 1400 according to an embodiment of this application. It should be noted that the beamforming system 1400 is applicable to a scenario in which a plurality of pieces of incident light have different wavelengths. In other words, in the beamforming system 1400, wavelengths of a plurality of paths of first signal light received by a first WSS 1440 are different. As shown in FIG. 14, a laser array 1410, a modulator array 1430, an M-input N-output first WSS 1440, an N-input K-output first Rotman lens 1450, a 1-input P-output second WSS array 1460, a P-input T-output second Rotman lens array 1470, a wavelength division demultiplexer array 1420, and a mixer array 1480 that have sequentially connected inputs and outputs are sequentially arranged in the beamforming system 1400 in a signal light transmission direction. M is an integer greater than 1, N is an integer greater than 1, K is an integer greater than 1, P is an integer greater than 1, and T is an integer greater than 1. The laser array 1410 includes M lasers that respectively correspond to M modulators in the modulator array 1430. The first WSS 1440 may select different output ports (that is, different input ports of the first Rotman lens 1450) for first signal light with different wavelengths based on a wavelength of received incident light. Each second WSS in the 1-input P-output second WSS array 1460 may select a corresponding output port for one path of received second signal light based on a wavelength of the second signal light. The wavelength division demultiplexer array 1420 includes K*T wavelength division demultiplexers, and an input port of each wavelength division demultiplexer is configured to receive one of K*T paths of third signal light emitted by K*T second Rotman lenses. The mixer array 1480 includes M groups of mixers, and each group of mixers includes K*T mixers. Each group of mixers is configured to receive fourth signal light with a same wavelength that is output by K*T wavelength division demultiplexers, that is, M output ports of each wavelength division demultiplexer each correspond to an input port of one mixer in the M groups of mixers. For example, for a wavelength division demultiplexer #1 in FIG. 14, the wavelength division demultiplexer #1 includes M output ports, and each output port is configured to output fourth signal light with one wavelength. Therefore, the wavelength division demultiplexer #1 can output fourth signal light of λ1 to λM, and respectively output the fourth signal light of λ1 to λM to mixers #1 in all of the M groups of mixers.

It may be understood that each mixer may mix received fourth signal light with local oscillator light by using a homodyne solution or a heterodyne solution. This is not limited in this application. For example, when each mixer mixes the fourth signal light with the local oscillator light by using the homodyne solution, the homodyne local oscillator light may be low-power incident light split by an optical splitter from incident light emitted by each laser in the laser array 1410, or may be implemented by using a heterodyne laser to generate heterodyne local oscillator light having a same wavelength as incident light. When each mixer mixes the fourth signal light with the local oscillator light by using the heterodyne solution, the system further includes a heterodyne laser array 1411. The heterodyne laser array 1411 includes M heterodyne lasers (for example, a heterodyne laser #1 to a heterodyne laser #M in FIG. 14). When each group of mixers performs mixing by using the heterodyne solution, heterodyne local oscillator light may be obtained from a corresponding heterodyne laser. For example, for a mixer group #1, when the heterodyne solution is used, the heterodyne laser #1 generates heterodyne local oscillator light, and inputs the heterodyne local oscillator light to K*T mixers in the mixer group #1, so that the K*T mixers in the mixer group #1 generate K*T mixed signals.

It may be further understood that mixed signals emitted by the M groups of mixers may also be input to photoelectric detectors through at least one of the space division multiplexing fibers shown in FIG. 11, to complete conversion from optical signals to electrical signals. Alternatively, in the system, K*T segmented photoelectric detectors may be used to complete conversion from mixed optical signals to electrical signals. Alternatively, a wavelength division multiplexer array 1510 (as shown in FIG. 15) including K*T wavelength division multiplexers may be further arranged in the system. After a wavelength division multiplexing signal is first generated by using mixed signals of λ1 to λM, the wavelength division multiplexing signal is input to a detector (which is not shown in FIG. 15, and may refer to FIG. 13). For example, in FIG. 15, the wavelength division multiplexer array 1510 includes M wavelength division multiplexers, each wavelength division multiplexer has M input ports, and each port is configured to receive one path of mixed signal from each of the M groups of mixers. For example, for a wavelength division multiplexer #1, M input ports of the wavelength division multiplexer #1 may respectively correspond to mixers #1 in all of the M groups of mixers, and receive mixed signals of λ1 to λM from the M mixers #1.

In addition, for functions of the laser array 1410, the modulator array 1430, the N-input K-output first Rotman lens 1450, and the P-input T-output second Rotman lens array 1470 in the system 1400, correspondingly refer to the foregoing other embodiments, for example, related descriptions in the system 800 shown in FIG. 8(a) to FIG. 8(c). Details are not described herein again.

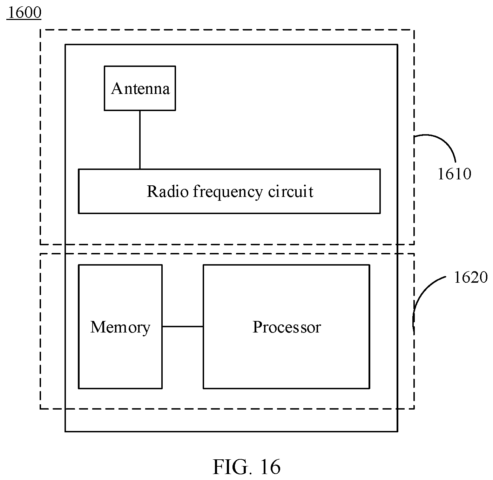

FIG. 16 shows a communication apparatus 1600 according to an embodiment of this application. The apparatus 1600 may be a base station, or may be a chip. An AAU of the apparatus 1600 includes the beamforming system mentioned above.

When the communication apparatus 1600 is a base station, FIG. 16 is a simplified diagram of a structure of the base station. The base station includes a part 1610 and a part 1620. The part 1610 includes an antenna and a radio frequency circuit. The antenna is mainly configured to receive and send radio frequency signals, and the radio frequency circuit is mainly configured to perform conversion between a radio frequency signal and a baseband signal. The part 1620 includes a memory and a processor, and is mainly configured to perform baseband processing, control a network device, and the like. The part 1610 may be usually referred to as a transceiver unit, a transceiver machine, a transceiver circuit, a transceiver, or the like. The part 1620 is usually a control center of the network device, may be usually referred to as a processing unit, and is configured to control the network device to perform a processing operation on a network device side in the foregoing method embodiments.

Optionally, a component that is in the part 1610 and that is configured to implement a receiving function may be considered as a receiving unit, and a component that is in the part 1610 and that is configured to implement a sending function may be considered as a sending unit. In other words, the part 1610 includes the receiving unit and the sending unit. The receiving unit may also be referred to as a receiver, a receive machine, a receiving circuit, or the like, and the sending unit may also be referred to as a transmitter, a transmit machine, a transmitting circuit, or the like.

When data needs to be sent, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the network device, the radio frequency circuit receives a radio frequency signal through the antenna, converts the radio frequency signal into a baseband signal, and outputs the baseband signal to the processor. The processor converts the baseband signal into data, and processes the data.

The part 1620 may include one or more boards, and each board may include one or more processors and one or more memories. For ease of description, FIG. 16 shows only one memory and one processor. The processor is configured to read and execute a program in the memory, to implement a baseband processing function and control the network device. If there are a plurality of boards, the boards may be interconnected with each other, to enhance a processing capability. In an optional implementation, a plurality of boards may share one or more processors, or a plurality of boards share one or more memories.

It should be understood that FIG. 16 is merely an example rather than a limitation. A base station including the transceiver unit and the processing unit may not depend on the structure shown in FIG. 16.

When the communication apparatus 1600 is a chip, the chip includes a transceiver unit and a processing unit. The transceiver unit may be an input/output circuit or a communication interface. The processing unit is a processor, a microprocessor, or an integrated circuit integrated on the chip.

An embodiment of this application further provides a communication system. The system includes the base station in the foregoing embodiments. A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A beamforming system, comprising a first optical diffraction module and a second optical diffraction module array, wherein the first optical diffraction module comprises at least one input port and a plurality of output ports, and each second optical diffraction module in the second optical diffraction module array comprises one input port and a plurality of output ports, wherein
the first optical diffraction module is configured to receive at least one path of first signal light, and generate a plurality of paths of second signal light with different phases based on the at least one path of first signal light; and
each second optical diffraction module is configured to receive one path of second signal light in the plurality of paths of second signal light, and generate a plurality of paths of third signal light with different phases based on the one path of second signal light, wherein the plurality of paths of third signal light are used to generate a plurality of paths of first radio frequency signal.

2. The system according to claim 1, wherein the first optical diffraction module comprises a first optical switch and a first optical diffraction device, the second optical diffraction module array comprises a second optical switch array and a second optical diffraction device array, each second optical diffraction module comprises one second optical switch and one second optical diffraction device, a plurality of output ports of the first optical switch are in one-to-one correspondence with a plurality of input ports of the first optical diffraction device, a plurality of output ports of the first optical diffraction device are in one-to-one correspondence with input ports of a plurality of second optical switches in the second optical switch array, and a plurality of output ports of each second optical switch are in one-to-one correspondence with a plurality of input ports of a corresponding second optical diffraction device, wherein
the first optical switch is configured to receive the at least one path of first signal light, and output the at least one path of first signal light to at least one input port of the first optical diffraction device;
the first optical diffraction device generates the plurality of paths of second signal light with the different phases based on the at least one path of first signal light received by the at least one input port, and outputs the plurality of paths of second signal light to the input ports of the plurality of second optical switches of the plurality of second optical diffraction modules;
each second optical switch is configured to receive the one path of second signal light, and output the one path of second signal light to the plurality of input ports of the corresponding second optical diffraction device; and
each second optical diffraction device generates the plurality of paths of third signal light with the different phases based on a plurality of paths of second signal light received by the plurality of input ports.

3. The system according to claim 2, wherein the system further comprises a first mixer array; and
each mixer in the first mixer array generates one path of first mixed signal light based on one path of third signal light from a corresponding second optical diffraction device and local oscillator light, wherein the one path of first mixed signal light is used to generate one path of first radio frequency signal.

4. The system according to claim 3, wherein a plurality of output ports of each second optical diffraction device are in one-to-one correspondence with input ports of a plurality of first mixers in the first mixer array, and each first mixer is specifically configured to:
receive the one path of third signal light from the corresponding second optical diffraction device, and mix the one path of third signal light with the local oscillator light to generate the one path of first mixed signal light.

5. The system according to claim 3, wherein the first optical switch is a wavelength selective switch, and the second optical switch array is a wavelength selective switch array.

6. The system according to claim 5, wherein the system further comprises a wavelength division demultiplexer array, the wavelength division demultiplexer array is located between the second optical diffraction device array and the first mixer array, a plurality of output ports of each second optical diffraction device are in one-to-one correspondence with input ports of a plurality of wavelength division demultiplexers in the wavelength division demultiplexer array, and a plurality of output ports of each wavelength division demultiplexer in the wavelength division demultiplexer array are in one-to-one correspondence with input ports of a plurality of second mixers in the first mixer array;
each wavelength division demultiplexer is configured to receive the one path of third signal light from the corresponding second optical diffraction device, and demultiplex the one path of third signal light into a plurality of paths of fourth signal light with different wavelengths; and
each second mixer is specifically configured to:
receive one path of fourth signal light from a corresponding wavelength division demultiplexer, and mix the one path of fourth signal light with the local oscillator light to generate the one path of first mixed signal light.

7. The system according to claim 6, wherein the system further comprises a first photoelectric detector array, and input ports of each first photoelectric detector in the first photoelectric detector array are in one-to-one correspondence with output ports of the plurality of second mixers; and
each first photoelectric detector is configured to receive, through a space division multiplexing fiber, a plurality of paths of first mixed signal light output by the plurality of second mixers, and convert the plurality of paths of first mixed signal light into a plurality of paths of first electrical signal; or
each first photoelectric detector is a segmented photoelectric detector, and is configured to receive a plurality of paths of first mixed signal light output by the plurality of second mixers, and convert the plurality of paths of first mixed signal light into a plurality of paths of first electrical signal.

8. The system according to claim 6, wherein the system further comprises a first wavelength division multiplexer array, and input ports of each first wavelength division multiplexer in the first wavelength division multiplexer array are in one-to-one correspondence with output ports of the plurality of second mixers; and
each first wavelength division multiplexer is configured to receive a plurality of paths of first mixed signal light from the plurality of corresponding second mixers, and generate one path of first wavelength division multiplexing signal light based on the plurality of paths of first mixed signal light.

9. The system according to claim 8, wherein the system further comprises a second photoelectric detector array, and an input port of each second photoelectric detector in the second photoelectric detector array is in one-to-one correspondence with an output port of each first wavelength division multiplexer; and
each second photoelectric detector is configured to receive the one path of first wavelength division multiplexing signal light from the corresponding first wavelength division multiplexer, and convert the one path of first wavelength division multiplexing signal light into one path of second electrical signal.

10. The system according to claim 3, wherein the first optical diffraction module is configured to receive one path of first signal light, the system further comprises a third optical diffraction module and a fourth optical diffraction module array, the third optical diffraction module comprises at least one input port and a plurality of output ports, and each fourth optical diffraction module in the fourth optical diffraction module array comprises one input port and a plurality of output ports, wherein
the third optical diffraction module is configured to receive one path of fifth signal light, and generate a plurality of paths of sixth signal light with different phases based on the one path of fifth signal light; and
each fourth optical diffraction module is configured to receive one path of sixth signal light in the plurality of paths of sixth signal light, and generate a plurality of paths of seventh signal light with different phases based on the one path of sixth signal light, wherein the plurality of paths of seventh signal light are used to generate a plurality of paths of second radio frequency signal.

11. The system according to claim 10, wherein the third optical diffraction module comprises a third optical switch and a third optical diffraction device, the fourth optical diffraction module array comprises a fourth optical switch array and a fourth optical diffraction device array, each fourth optical diffraction module comprises one fourth optical switch and one fourth optical diffraction device, a plurality of output ports of the third optical switch are in one-to-one correspondence with a plurality of input ports of the third optical diffraction device, a plurality of output ports of the third optical diffraction device are in one-to-one correspondence with input ports of a plurality of fourth optical switches in the fourth optical switch array, and a plurality of output ports of each fourth optical switch are in one-to-one correspondence with a plurality of input ports of a corresponding fourth optical diffraction device, wherein
the third optical switch is configured to receive the one path of fifth signal light, and output the one path of fifth signal light to at least one input port of the third optical diffraction device;
the third optical diffraction device generates the plurality of paths of sixth signal light with the different phases based on the at least one path of fifth signal light received by the at least one input port, and outputs the plurality of paths of sixth signal light to the input ports of the plurality of fourth optical switches of the plurality of fourth optical diffraction modules;
each fourth optical switch is configured to receive the one path of sixth signal light, and output the one path of sixth signal light to the plurality of input ports of the corresponding third optical diffraction device; and
each fourth optical diffraction device generates the plurality of paths of seventh signal light with the different phases based on the plurality of paths of sixth signal light received by the plurality of input ports.

12. The system according to claim 11, wherein the system further comprises a second mixer array, and a plurality of output ports of each fourth optical diffraction device are in one-to-one correspondence with input ports of a plurality of mixers in the second mixer array; and
each mixer in the second mixer array receives one path of seventh signal light from a corresponding fourth optical diffraction device, and mixes the one path of seventh signal light with local oscillator light to generate one path of second mixed signal light, wherein the one path of second mixed signal light is used to generate one path of second radio frequency signal.

13. The system according to claim 12, wherein the system further comprises a third photoelectric detector array, an input port of each third photoelectric detector in the third photoelectric detector array is in one-to-one correspondence with an output port of one mixer in the first mixer array, and the input port of each third photoelectric detector is in one-to-one correspondence with an output port of one mixer in the second mixer array; and
each third photoelectric detector is configured to receive one path of first mixed signal light and one path of second mixed signal light through a space division multiplexing fiber, convert the one path of first mixed signal light into one path of third electrical signal, and convert the one path of second mixed signal light into one path of fourth electrical signal; or
each third photoelectric detector is a segmented photoelectric detector, and is configured to receive one path of first mixed signal light and one path of second mixed signal light, convert the one path of first mixed signal light into one path of third electrical signal, and convert the one path of second mixed signal light into one path of fourth electrical signal.

14. The system according to claim 12, wherein the system further comprises a second wavelength division multiplexer array, an input port of each second wavelength division multiplexer in the second wavelength division multiplexer array is in one-to-one correspondence with an output port of one mixer in the first mixer array, and the input port of each second wavelength division multiplexer is in one-to-one correspondence with an output port of one mixer in the second mixer array; and
each second wavelength division multiplexer is configured to receive one path of first mixed signal light and one path of second mixed signal light, and convert the one path of first mixed signal light and the one path of second mixed signal light to generate one path of second wavelength division multiplexing signal light.

15. The system according to claim 14, wherein the system further comprises a fourth photoelectric detector array, and input ports of a plurality of photoelectric detectors in the fourth photoelectric detector array are in one-to-one correspondence with output ports of a plurality of second wavelength division multiplexers in the second wavelength division multiplexer array; and
each fourth photoelectric detector is configured to receive the one path of second wavelength division multiplexing signal light from the corresponding second wavelength division multiplexer, and convert the one path of second wavelength division multiplexing signal light into one path of fifth electrical signal.

16. The system according to any one of claims 1 to 15, wherein the first optical diffraction device comprises a first Rotman lens, and the second optical diffraction device array comprises a second Rotman lens array.

17. A wireless communication base station, wherein the base station comprises an active antenna unit AAU, and the AAU comprises the beamforming system according to any one of claims 1 to 16.
